# EUROPÄISCHE PATENTANMELDUNG

(11) **EP 3 208 675 A1**
(43) Veröffentlichungstag der Anmeldung: **23.08.2017**
(21) Anmeldenummer: 16156747.4
(22) Anmeldetag: 22.02.2016
(51) Int. Cl.: G05B 19/418, G06Q 10/06

(54) **PLANUNGS- UND ENGINEERING-VERFAHREN SOWIE WERKZEUG FÜR EINE VERFAHRENS- ODER PROZESSTECHNISCHE ANLAGE**

(71) Anmelder: Siemens Aktiengesellschaft, 80333 München (DE)
(72) Erfinder: Drumm, Oliver, 76344 Eggenstein-Leopoldshafen (DE); Lutz, Benjamin, 76327 Pfinztal (DE); Wolf, Gerrit, 76187 Karlsruhe (DE)

(57) **Zusammenfassung**

Die Erfindung betrifft ein Planungs- und Engineering-Verfahren sowie ein entsprechendes Werkzeug (4) für eine verfahrens- oder prozesstechnische Anlage (1), wobei mittels des Werkzeugs (4) ein Abhängigkeitsgraph (40) auf der Grundlage eines R&I-Fließschemas erstellt wird, in welchem
- Anlagenkomponenten, die Feldgeräte und/oder Automatisierungsprogramme umfassen, durch Knoten (42, 43, 44, 45, 46, 47, 51, 52, 58) repräsentiert werden,
- Assoziationen, die Abhängigkeiten und/oder Verbindungen zwischen den Anlagenkomponenten umfassen, durch Kanten (41, 48, 49, 50, 53, 55, 56, 57, 59, 60, 61, 62) zwischen den jeweiligen Knoten repräsentiert werden,
- Interferenzen, die den jeweiligen Grad und/oder die jeweilige Klassifizierung und/oder Bedeutung und/oder Gewichtung einer Assoziation umfassen, Assoziationen zugeordnet werden.

Anhand eines derartigen Abhängigkeitsgraphen (40) wird einem Anlagenplaner die Erkennung von Konflikten in einer geplanten Anlage erheblich erleichtert. Somit können bereits in der Anlagenplanung unerwünschte Seiteneffekte, die sich im späteren Betrieb der Anlage negativ auswirken würden, entfernt werden.

## Beschreibung

Die Erfindung betrifft ein Planungs- und Engineering-Verfahren für eine Verfahrens- oder prozesstechnische Anlage sowie ein entsprechendes Planungs- und Engineering-Werkzeug.

Um das Engineering einer Automatisierung einer verfahrens- oder prozesstechnischen Anlage, im Folgenden kurz Anlage genannt, durchzuführen, wird in einem Planungs- und Engineering-Werkzeug üblicherweise in einem ersten Schritt die Struktur der Anlage erfasst und mittels des Werkzeugs ein R&I-Fließschema, häufig in englischer Sprache auch als Piping and Instrumentation Diagram oder P&ID bezeichnet, der Anlage oder von Teilen der Anlage durch Verknüpfung von graphischen Prozessobjekten erstellt. Die graphischen Prozessobjekte repräsentieren die für den Betrieb der Anlage erforderlichen Komponenten oder Komponentengruppen, z. B. Sensoren, Motoren, Pumpen, Ventile, Rohrleitungen, Tanks etc. Die graphischen Prozessobjekte sind zumeist als standardisierte Bausteine in Bibliotheken enthalten und werden mittels eines geeigneten Editors auf einer Bedienoberfläche des Werkzeugs nach technologischen Gesichtspunkten platziert und miteinander verschaltet.

Die Planung und das Engineering von Anlagen hat über die letzten Jahre eine große Entwicklung erfahren. Vom früheren Prozess der Planung auf Papier hin zu heutigen CAD-Werkzeugen, welche Objekt- und komponentenorientiert arbeiten, hat sich viel getan. Beispielsweise ist in der EP 2 166 421 A1 ein Verfahren beschrieben, welches die Generierung von Regeln für ein Manufacturing Execution System (MES) erleichtert. Für die Errichtung eines MES in einer verfahrenstechnischen Anlage muss der Materialfluss innerhalb der Anlage bekannt sein. Diese Abläufe werden im MES in Form von Regeln modelliert, welche eine Pluralität von Zuständen von Anlageelementen auf einen Materialfluss abbilden. Die Regeln werden mittels eines computergestützten Werkzeugs automatisch anhand der Verschaltung und der Zustände der Anlageelemente auf der Grundlage eines bereitgestellten R&I-Fließschemas ermittelt.

In einem R&I-Fließschema werden neben der graphischen Darstellung der Komponenten auch Verknüpfungen der Objekte untereinander gezeigt, die bisher jedoch nicht auf vorhandene Konflikte und nicht kompatible Randbedingungen hin analysiert werden. Selbst erfahrene Anlagenplaner und Anlagenprojekteure sind gegenwärtig kaum in der Lage, die wesentlichen Abhängigkeiten der eingesetzten Komponenten und die daraus resultierenden Seiteneffekte als Entscheidungsgrundlagen bei der Planung oder bei dem Engineering der Anlage zu überschauen. Die Qualität der Planung beruht bisher maßgeblich auf der Erfahrung des jeweiligen Anlagenplaners, der oft auch dann, wenn Anlagenteile wiederverwendet werden oder ähnliche Lösungen zur Verwendung in der Anlage lediglich angepasst werden müssen, nicht sicher sagen kann, dass eventuell bereits bekannte Probleme während des Betriebs der Anlage nicht auftreten werden. So werden bei der Planung gemachte Fehler oft erst bei der Errichtung und Inbetriebnahme der Anlage erkannt. Derartige Fehler können beispielsweise durch Schwingungsverhalten von Sensoren und Regelkreisen aufgrund falsch ausgewählter Komponenten oder deren falscher Platzierung herrühren.

Der Erfindung liegt die Aufgabe zugrunde, ein Planungs- und Engineering-Verfahren sowie ein entsprechendes Werkzeug für eine Verfahrens- oder prozesstechnische Anlage zu schaffen, durch welche einem Anlagenplaner die Erkennung von Konflikten oder eventuellen Fehlern in einer Anlagenplanung erleichter wird.

Zur Lösung dieser Aufgabe weist das neue Planungs- und Engineering-Verfahren die in Anspruch 1, das neue Planungs- und Engineering-Werkzeug die in Anspruch 7 genannten Merkmale auf. Vorteilhafte Weiterbildungen der Erfindung sind in den abhängigen Ansprüchen beschrieben.

Die Erfindung hat den Vorteil, dass es einem Anlagenfahrer aufgrund der übersichtlichen Darstellung der Abhängigkeiten in einem Abhängigkeitsgraphen erheblich erleichtert wird, in einer Anlagenplanung vorhandene Abhängigkeiten zu beherrschen, und dass es damit sogar ermöglicht wird, einem Anlagenplaner Hilfestellung zu leisten, wenn es darum geht, unerwünschte Seiteneffekte zwischen Komponenten zu minimieren oder völlig zu entfernen. Dabei wird die Detektion von Problemen und Seiteneffekten über den gesamten Lebenszyklus der Anlage hinweg ermöglicht, nämlich in der Anlagenplanung, im Engineering der Automatisierung, bei der Inbetriebnahme sowie bei Wartung und Pflege. In vorteilhafter Weise geschieht dies insbesondere durch interaktive Unterstützung des Anwenders während des Planungsprozesses. Dabei kann zudem eine Gewichtung von Herausforderungen erstellt und anhand dieser eine Reihenfolge der Abarbeitung erkannter Konflikte vorgegeben werden. Dies kann durch eine Akquisition von Wissen und einem Aufbau einer Wissensbasis, die für zukünftige Projekte genutzt werden kann, vorteilhaft ergänzt werden.

Vorzugsweise werden mittels des Planungs- und EngineeringWerkzeugs auf der Grundlage zumindest des R&I-Fließschemas Assoziationen automatisch in den Abhängigkeitsgraphen eingefügt. Das hat den Vorteil, dass nur wenige manuelle Eingaben eines Bedieners erforderlich sind und der Aufwand für die Erstellung des Abhängigkeitsgraphen niedrig gehalten wird.

Da aus der Anlagenplanung nicht immer alle Abhängigkeiten abgeleitet werden können, ist zudem eine manuelle Editierbarkeit von Assoziationen vorteilhaft. Dann kann der Anlagenplaner mittels eines Editors Assoziationen in den Abhängigkeitsgraphen einfügen oder aus diesem entfernen. Er kann somit Abhängigkeiten in den Graphen integrieren, die ihm bekannt sind, zuvor jedoch nicht durch ein Planungswerkzeug beispielsweise im R&I-Fließschema hinterlegt wurden. Dies kann beispielsweise aufgrund einer gemeinsamen mechanischen Montage von mehreren Prozessinstrumenten, z. B. eines Füllstandsmessumformers und einer Pumpe, auf einen Träger auftreten. Umgekehrt ist es auch möglich, Assoziationen, die automatisch aus z. B. einem R&I-Fließschema abgeleitet wurden, wieder zu entfernen, falls an dieser Stelle keine wirkliche Abhängigkeit existiert oder eine vorhandene Abhängigkeit nicht betrachtet werden soll. Ergänzend zum R&I-Fließschema können weitere Planungsunterlagen, beispielsweise ein Stromlaufbahn, ein Loop-Diagramm, ein Topologie-Diagramm, eine Funktionsplanung und/oder eine Schaltschrankplanung als Grundlage für die Erstellung des Abhängigkeitsgraphen dienen, die eine gute Basis für die initiale automatische Generierung des Abhängigkeitsgraphen bilden.

Gemäß einer besonders vorteilhaften Ausgestaltung der Erfindung werden den Assoziationen Werte einer Gewichtung zugewiesen, welche die Art der jeweiligen Abhängigkeit, beispielsweise eine Abhängigkeit aufgrund einer mechanischen Verbindung oder aufgrund einer elektrischen oder logischen Verbindung, klassifizieren. Dabei kann vorteilhaft so vorgegangen werden, dass der Wert der Gewichtung einer Assoziation zunächst per Default-Einstellung auf einen Minimalwert gesetzt wird. Wenn die Assoziation aufgrund einer Verbindung in einem R&I-Fließschema erstellt wurde, handelt es sich um eine mechanische Verbindung, die einen entsprechenden Wert zu ihrer Kennzeichnung erhält. Stammt die Verbindung dagegen aus einem Stromlaufplan, wird diese als elektrische Verbindung erkannt und durch den jeweils dieser Art von Verbindungen zugeordneten Wert gekennzeichnet. Auch wenn ein und dasselbe Objekt auf unterschiedlichen Plänen vorhanden sein kann, wird dieses Objekt als Anlagenkomponente nur einmal in den Abhängigkeitsgraphen aufgenommen. Durch die Klassifikation der Assoziationen anhand der Vergabe von Werten für die Gewichtung wird es ermöglicht, beispielsweise nach allen Assoziationen, die eine mechanische Verbindung darstellen, zu filtern.

Durch die Erfindung wird in besonderer Weise der Vorteil einer objektorientierten Anlagenplanung genutzt, dass alle Daten und Parameter von Komponenten als sogenannte Produktdaten hinterlegt werden. Damit liegt mit den Planungsdaten bereits eine Basis vor, auf welcher ein Abhängigkeitsgraph zur übersichtlichen Darstellung erstellt werden kann. Zudem können anhand dieser Basis Randbedingungen abgeglichen und Konflikte festgestellt werden.

Gemäß einer besonders vorteilhaften Ausgestaltung der Erfindung können Komponenten und/oder Assoziationen zu ihrer Beschreibung mit Merkmalen nach dem e-Cl@ss-Standard, beispielsweise Release 4.0 oder höher, versehen werden: Der e-Cl@ss-Standard ist ein hierarchisches System nach Art eines Klassifikationssystems und ist zur Gruppierung von Produkten und Dienstleistungen geeignet. Merkmale ermöglichen deren detaillierte Beschreibung und so eine Suche in verschiedenen Katalogen oder Datenbanksystemen. Die Merkmale werden durch Werte definiert. Jeweils angehängte Schlagwörter und Synonyme dienen dem schnellen, zielgerichteten Auffinden der Produktklassen und ihrer Merkmalleisten.

Mit dem e-Cl@ss-Standard kann somit eine gut für das Verfahren geeignete Beschreibungssprache gewählt werden, durch welche eine Herstellerunabhängigkeit und Wiederverwendbarkeit der Objektdaten gewährleistet werden kann.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- FIG 1: ein Beispiel für eine prozesstechnische Anlage,
- FIG 2: ein Beispiel eines R&I-Fließschemas,
- FIG 3: ein Objektmodell eines Abhängigkeitsgraphen und
- FIG 4: ein Beispiel eines Abhängigkeitsgraphen.

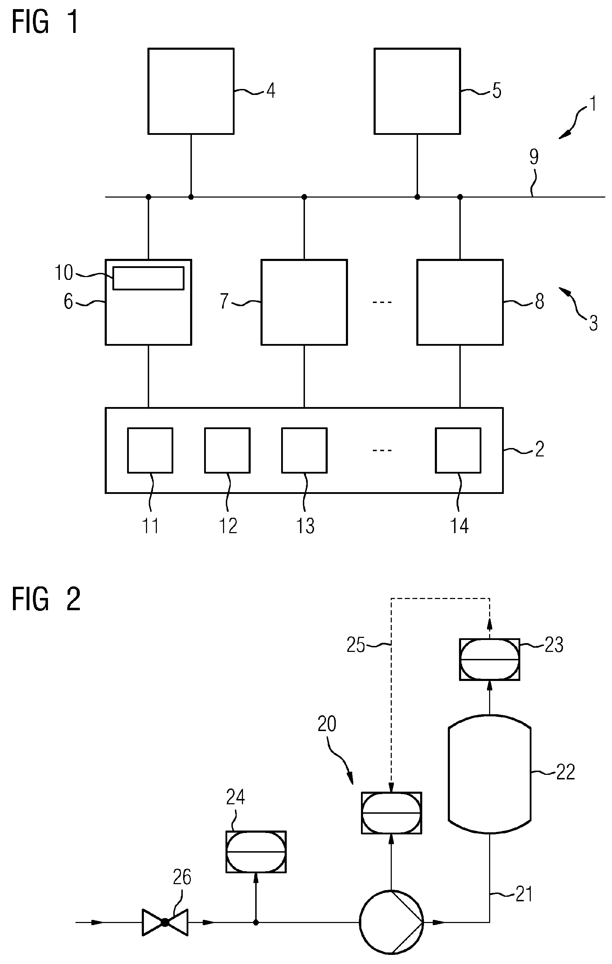

Figur 1 zeigt in vereinfachter schematischer Darstellung eine prozesstechnische Anlage 1, in der ein Prozess 2 mittels eines Automatisierungssystems 3 gesteuert wird. Das Automatisierungssystem 3 enthält ein Planungs- und Engineering-Werkzeug 4, ein Bedien- und Beobachtungsgerät 5 und eine Vielzahl von Automatisierungsgeräten 6, 7, 8, die über ein Bussytem 9 zur Datenkommunikation miteinander verbunden sind. Die Automatisierungsgeräte 6, 7, 8 steuern den technischen Prozess 2 nach Maßgabe von Automatisierungsprogrammen, von welchen beispielhaft in Figur 1 ein Automatisierungsprogramm 10 eingezeichnet ist. Das Automatisierungsprogramm 10 beispielsweise besteht meist aus mehreren Funktionsbausteinen, welche mit weiteren, im Automatisierungssystem 3 verteilten Funktionsbausteinen in Wechselwirkung stehen können. Die Funktionsbausteine sind in Figur 1 der Übersichtlichkeit wegen nicht dargestellt. Als bedien- und beobachtbare Einrichtungen werden zur Steuerung des Prozesses 2 vielfältige Feldgeräte 11, 12, 13, 14 zur Prozessinstrumentierung eingesetzt. Messumformer dienen zur Erfassung von Prozessvariablen, wie beispielsweise Temperatur, Druck, Durchflussmenge, Füllstand, Dichte oder Gaskonzentration eines Mediums. Durch Stellglieder kann der Prozessablauf in Abhängigkeit von erfassten Prozessvariablen beispielsweise den Vorgaben des Automatisierungsprogramms 10 entsprechend beeinflusst werden. Als Beispiele für Stellglieder seien ein Regelventil, eine Heizung oder eine Pumpe genannt.

Mittels des Planungs- und Engineeringwerkzeugs 4 wird in einer Anlagenplanungsphase ein R&I-Fließschema der Anlage 1 erstellt, in welchem für den Betrieb der Anlage erforderliche Komponenten und deren Verbindungen symbolisch dargestellt sind. Komponenten werden als graphische Prozessobjekte, Verbindungen als Linien zwischen den Prozessobjekten gezeichnet.

In Figur 2 ist ein Ausschnitt eines R&I-Fließschemas zu sehen, in welchem durch eine Pumpe 20 über eine Rohrleitung 21 Flüssigkeit in einem Tank 22 gepumpt wird. Am Tank 22 befindet sich eine Füllstandsmessstelle 23 und am Rohr 21 eine Coriolis-Durchflussmessstelle 24 mit einem Coriolis-Durchflussmessgerät. Über eine Regelung in einem Automatisierungssystem sind die Pumpe 20 und die Füllstandsmessstelle 23, die beispielsweise durch ein Radar-Füllstandsmessgerät realisiert sein kann, miteinander gekoppelt. Diese Kopplung ist in Figur 2 mit einer durchbrochenen Linie 25 symbolisch eingezeichnet. Zusätzlich befindet sich in der Rohrleitung 21 ein Schließventil 26.

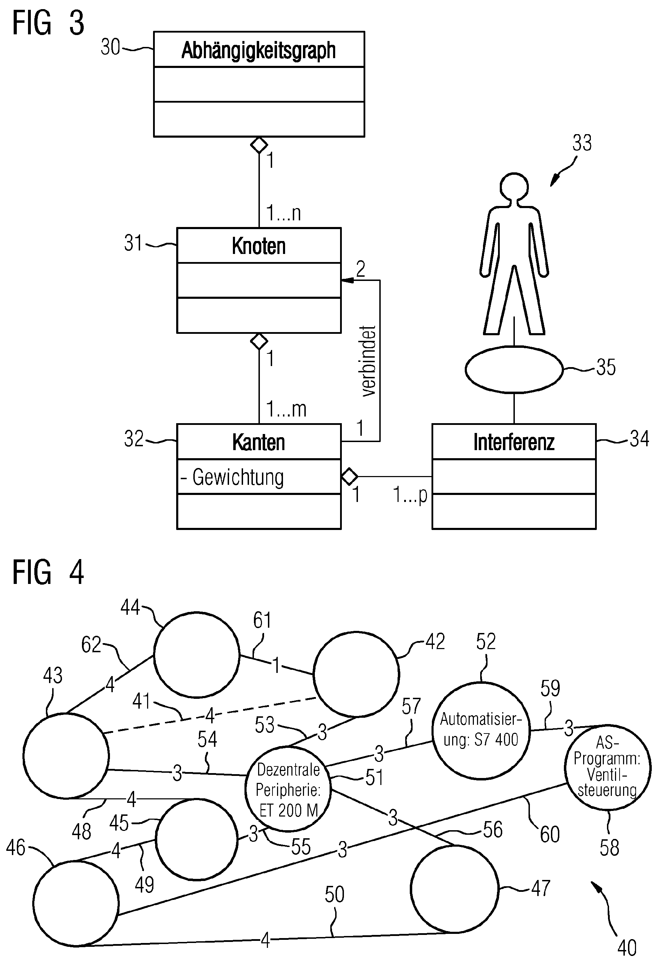

Anhand des UML-Klassendiagramms gemäß Figur 3 soll im Folgenden ein formales Objektmodell eines Abhängigkeitsgraphen erläutert werden. Im Abhängigkeitsgraphen 30 ("Abhängigkeitsgraph") steht jeder Knoten 31 (Beschriftung "Knoten" in Figur 3) für eine relevante Anlagenkomponente, bei welcher es sich um ein Feldgerät oder ein Automatisierungsprogramm handeln kann. Eine Kante 32 ("Kanten") steht für eine Assoziation zwischen Anlagenkomponenten, d. h. Feldgeräten oder Automatisierungsprogrammen. Durch die Beschriftung "verbindet" an einem Pfeil in Figur 3 zwischen Kanten 32 und Knoten 31 wird angedeutet, dass Kanten in einem gemäß dem dargestellten Objektmodell erstellten Abhängigkeitsgraphen Verbindungen zwischen Knoten darstellen. Sind beispielsweise eine Pumpe und ein Durchflussmessgerät am selben Rohr angebracht, so existiert eine Assoziation, welche durch eine Kante dargestellt wird. Durch einen Anlagenplaner, Verfahrenstechniker oder Automatisierungsingenieur 33 oder auch automatisch durch ein Planungs- und Engineering-Werkzeug können für jede Kante 32 sogenannte Interferenzen 34 ("Interferenz") hinterlegt werden, wie es durch einen Aktionskreis 35 in Figur 3 symbolisiert ist. Interferenzen 34 konkretisieren Assoziationen, bei denen es sich beispielsweise um eine Abhängigkeit handeln kann, die im Objektmodell des Abhängigkeitsgraphen einer Kante 32 entspricht. Eine Interferenz 34 könnte beispielsweise eine Materialeigenschaft, eine Messfrequenz usw. sein. Kanten 32 können mit einer Gewichtung (Beschriftung "Gewichtung" in Figur 3) versehen werden, um ein Maß für den Grad der Assoziation, die als eine Art Klassifizierung angesehen werden kann, modellieren zu können. Je höher der Wert der Gewichtung, desto höher der Grad der Assoziation.

Figur 4 zeigt nun einen Abhängigkeitsgraphen 40, in welchem Kanten, welche Assoziationen zwischen jeweils 2 Knoten repräsentieren, mit dem jeweiligen Wert ihrer Gewichtung versehen sind. Der in Figur 4 dargestellte Wert "4" einer Gewichtung steht beispielsweise für eine mechanische Kopplung, z. B. eine Rohrverbindung, der Wert "3" für eine elektrische oder logische Verbindung, z. B. über ein Bussystem, und der Wert "1" für eine berührungslose Kopplung, beispielsweise das Radarsignal eines Füllstandsmessgeräts.

Eine Kante im Abhängigkeitsgraphen 40 bedeutet zunächst einmal, dass irgendeine Verbindung oder Abhängigkeit zwischen zwei Anlagenkomponenten, die durch Knoten repräsentiert werden, vorhanden ist. In Verfahrens- oder prozesstechnischen Anlagen existieren vielzählige Assoziationen, sodass bei einer antizipierenden Planung eine softwaretechnische Berücksichtigung aller aufwendig ist. Vorteilhaft ist daher beispielsweise die oben erläuterte Gewichtung der Assoziationen, mit welcher es möglich ist, lediglich diejenigen mit der größten Bedeutung zu betrachten, beispielsweise Assoziationen einer Gewichtung, die einer mechanischen Kopplung von Anlagenkomponenten entspricht. Da aus Unterlagen der Anlagenplanung, z. B. einem bereitgestellten R&I-Fließschema, nicht immer alle Assoziationen abgeleitet werden können, ist vorteilhaft eine manuelle Editierung von Assoziationen mithilfe eines graphischen Editors möglich. Durch Einfügen einer zusätzlichen Kante in den Abhängigkeitsgraphen 40 kann der Anlagenplaner Abhängigkeiten zwischen Komponenten ergänzen, die ihm zwar bekannt sind, jedoch nicht aus den vorhandenen Planungsunterlagen entnommen werden können. Dies kann beispielsweise, wie in Figur 4 dargestellt, eine Kante 41 sein zwischen einem Knoten 42, der ein Radar-Füllstandsmessgerät repräsentiert, und einem Knoten 43, der eine Pumpe repräsentiert, wobei die Kante 41 als Assoziation eine gemeinsame mechanische Montage von Anlagenkomponenten auf einem mechanischen Träger repräsentiert. Umgekehrt ist es für einen Anlagenplaner auch möglich, Assoziationen, die automatisch aus Planungsunterlagen abgeleitet wurden, aus dem Abhängigkeitsgraphen 40 zu entfernen, falls erkannt wurde, dass an dieser Stelle keine wirkliche Abhängigkeit zwischen Anlagenkomponenten existiert bzw. falls die durch die jeweilige Kante repräsentierte Assoziation von der Betrachtung durch den Anlagenplaner ausgeschlossen werden soll. Eine gute Grundlage für die initiale, d. h. in der Planung und dem Engineering einer Anlage erstmalige, automatische Generierung eines Abhängigkeitsgraphen bilden interaktive Planungsdokumente, wie sie beispielsweise in dem von der Siemens AG angebotenen Werkzeug COMOS erstellt werden. Zu diesen Planungsdokumenten zählen u. a. R&I-Fließschemata der Anlage oder von Anlagenteilen, Stromlaufpläne, Loop-Diagramme, Topologie-Diagramme, die Funktionsplanung und die Schaltschrankplanung.

Planungsdokumente können softwaretechnisch in einen Programmcode folgender Struktur zur Erstellung des Abhängigkeitsgraphen abgearbeitet werden:

```
 ForEach document Of engineering {
 ForEach object On document {
  If Not graph Contains object {
   graph Add object
  }
 }
 ForEach object on document {
  ForEach connection of object {
   If connection IsOn document {
    If Not graph Contains connection {
     Set connection default load
     graph Add connection
    }
   }
  }
 }
 }
```

Bei dieser Vorgehensweise werden alle dargestellten Prozessobjekte als Knoten, wenn noch nicht im bereits erstellten Teil des Abhängigkeitsgraphen vorhanden, neu in den Graph aufgenommen. Anschließend werden für jedes Objekt die mit ihm verbundenen Objekte bestimmt und die gefundenen Verbindungen als Assoziationen, d. h. Knoten, in den Graph aufgenommen, sofern diese nicht bereits eingezeichnet waren. Die Gewichtung einer Assoziation ist erst einmal auf einen Minimalwert gesetzt. Stammt eine Verbindung, welche durch eine Kante repräsentiert wird, von einem R&I-Fließschema, so kann sie mit beispielsweise einem Wert 4 ihrer Gewichtung zur Kennzeichnung einer mechanischen Verbindung versehen werden. Handelt es sich um eine aus einem Stromlaufplan entnommene Verbindung, wird diese als elektrische Verbindung angesehen und mit beispielsweise dem Wert 3 gewichtet. Selbst wenn dasselbe Prozessobjekt oder dieselbe Verbindung zwischen Prozessobjekten auf unterschiedlichen Plänen vorhanden ist, wird das Objekt bzw. die Assoziation nur einmal als Knoten bzw. Kante in den Abhängigkeitsgraphen aufgenommen.

Auf der Grundlage des in Figur 2 dargestellten R&I-Fließschemas wurden so im Abhängigkeitsgraphen 40 (Figur 4) die bereits erwähnten Knoten 42 für das Füllstandsmessgerät (23 in Figur 2) und 43 für die Pumpe (20 in Figur 2) sowie weitere Knoten 44 für den Tank (22 in Figur 2), 45 für das Coriolis-Durchflussmessgerät (24 in Figur 2), 46 für das Ventil (26 in Figur 2) und ein Knoten 47 für einen dem Ventil zugehörigen, in Figur 2 nicht dargestellten Stellungsregler eingefügt. Zugehörige Rohrleitungsverbindungen werden im Abhängigkeitsgraphen 40 als Kanten 48, 49, 50 und 62 ergänzt, deren Gewichtung jeweils mit dem Wert 4 für eine mechanische Verbindung versehen wird. Im beschriebenen Ausführungsbeispiel arbeitet das Füllstandsmessgerät, repräsentiert durch Knoten 42, auf dem Radar-Prinzip. Die dazu bestehende Radarverbindung zwischen Tank, Knoten 44, und Füllstandsmessgerät, Knoten 42, wird durch eine Kante 61 repräsentiert, welche zur Kennzeichnung als eine berührungslose Verbindung den Wert 1 der Gewichtung erhält. Weiterhin werden aus einem Stromlaufplan als Planungsunterlage ein Prozessobjekt "Dezentrale Peripherie: ET 200 M" sowie ein Prozessobjekt "Automatisierung: S7 400" als Knoten 51 bzw. 52 in den Abhängigkeitsgraphen 40 aufgenommen. Entsprechend ihren jeweiligen elektrischen Verbindungen mit den Knoten 42, 43, 45 und 47 werden in den Graphen 40 diese Verbindungen repräsentierende Kanten 53, 54, 55 bzw. 56 ergänzt und mit dem Wert 3 als Gewichtung versehen. Da auch zwischen den Prozessobjekten "Dezentrale Peripherie: ET 200 M" und "Automatisierung: S7 400", welche durch die Knoten 51 bzw. 52 repräsentiert werden, elektrische Verbindungen bestehen, wird zudem eine Kante 57 mit dem Wert 3 zwischen diesen ergänzt.

Neben den Abhängigkeiten, die sich aus einer verfahrenstechnischen Anlagenplanung herleiten lassen, sind im Sinne einer ganzheitlichen Betrachtung zudem auch die Abhängigkeiten der Prozessobjekte zu den Automatisierungsprogrammen (z. B. das in Figur 1 dargestellte Automatisierungsprogramm 10) inklusive der Projektierung der Automatisierungshardware (Automatisierungsgeräte 6, 7, 8 in Figur 1) zu berücksichtigen. Wie in dem R&I-Fließschema gemäß Figur 2 ersichtlich, werden nämlich in der verfahrenstechnischen Planung Aspekte der Programmierung des Automatisierungssystems noch nicht einbezogen. Figur 4 zeigt eine derartige Ergänzung beispielhaft und der Übersichtlichkeit wegen reduziert auf ein Prozessobjekt "AS-Programm: Ventilsteuerung", repräsentiert durch einen Knoten 58. Da das Programm auf Automatisierungsgeräte geladen wird, besteht eine logische Verbindung zum Knoten 52, die als Kante 59 eingezeichnet und mit dem Wert 3 als Gewichtung versehen ist. Da weiterhin das Automatisierungsprogramm, der Knoten 58, zur Steuerung der Anlagenkomponente Ventil, Knoten 46, eingesetzt wird, existiert im Graphen 40 zudem eine Kante 60 mit dem Wert 3 als Gewichtung entsprechend dieser logischen Verbindung.

Der Nutzen eines derartigen, zu großem Teil automatisch erstellten Abhängigkeitsgraphen 40, in welchem Abhängigkeiten zwischen Anlagenkomponenten untereinander und zudem zwischen Anlagenkomponenten und ihrer zugehörigen Automatisierungshardware und -software besonders deutlich werden, soll im Folgenden durch zwei einfache Anwendungsfälle anschaulich dargestellt werden:
1.Ein geeignetes Coriolis-Durchflussmessgerät soll in einer Anlage eingesetzt werden. Anhand des Abhängigkeitsgraphen zeigt sich, dass eine mechanische Kopplung, Kante 48, als Abhängigkeit zu einer Pumpe besteht und dass somit Schwingungen der Pumpe zum Coriolis-Durchflussmessgerät übertragen werden können, welche eventuell ungünstig für die Durchführung der Durchflussmessung sind. Zur Beseitigung dieses Konflikts ist ein Coriolis-Durchflussmessgerät zu wählen, dessen Schwingungs-Frequenz sich von der Pumpen-Frequenz hinreichend unterscheidet.
2.Ein bestehendes Ventil der Prozessinstrumentierung wird durch eine energieeffizientere Variante ersetzt. Anhand des Abhängigkeitsgraphen zeigt sich, dass eine mechanische Kopplung, Kante 49, als Abhängigkeit zum Coriolis-Durchflussmessgerät und eine logische Verbindung, Kante 60, zum Automatisierungsprogramm, Knoten 58 in Figur 4, besteht. Demnach muss ein Ventil, Knoten 46, mit einem Stellungsregler, Knoten 47, gewählt werden, dessen Frequenz unterschiedlich zur Schwingungsfrequenz des Durchflussmessgeräts, Knoten 45, ist. nach Austausch des Ventils muss zudem das Automatisierungsprogramm, Knoten 58, in geeigneter Weise angepasst werden.

Schon bei diesen einfachen Beispielen zeigt sich, dass es komplex sein kann, Abhängigkeiten in einer geplanten verfahrenstechnischen Anlage sowie Auswirkungen von Änderungen an der Anlage zu "überblicken", da hiervon unterschiedlichste Domänen oder Gewerke betroffen sein können. Die Bereitstellung eines zu großem Teil automatisch erstellten Abhängigkeitsgraphen, die sowohl in der Anlagenplanungs-Software als auch in der Engineering-Software der Automatisierung und der Parametrierungs-Software der Feldgeräte integriert werden kann, erleichtert es, derartige Abhängigkeiten zu beherrschen und Hilfestellungen zu leisten, wenn es darum geht, unerwünschte Seiteneffekte oder Konflikte ordnungsgemäß zu entfernen oder ihre Auswirkungen zu minimieren. Zudem ist es vorteilhaft, die gefundenen Assoziationen zu klassifizieren, sodass z. B. nach mechanischen Verbindungen als besonders bedeutende Assoziationen gefiltert werden kann.

Vorzugsweise wird jeder Assoziation eine Gewichtung oder Bedeutung zugeordnet. Dies erfolgt vorteilhaft in Form von Merkmalen, welche die jeweilige Bedeutung maschinenlesbar umschreiben. Besonders vorteilhaft ist die Verwendung einer standardisierten Beschreibungssprache für die Merkmale, um eine Herstellerunabhängigkeit und deren Wiederverwendbarkeit zu gewährleisten. So existieren Klassifikationen, die z. B. mechanische, elektrische oder logische Assoziationen kennzeichnen. Eine mechanische Assoziation stellt z. B. die Verbindung über eine Rohrleitung zwischen Pumpe und Durchflussmessgerät dar. Die Regelung zwischen einem Sensor und einem Aktor entspricht beispielsweise einer logischen Assoziation. Besonders vorteilhaft kann der e-Cl@ss-Standard zur Beschreibung verwendet werden, der inzwischen eine weite Verbreitung findet. Weiterhin können Unverträglichkeiten zwischen Produkteigenschaften, die als Produktdaten in den Planungsunterlagen hinterlegt sind, als Assoziation in den Abhängigkeitsgraphen aufgenommen werden. Als Beispiel dafür sei die Verbindung zwischen zwei Flanschen unterschiedlicher Materialien, die in einer Anlage zu Schwierigkeiten führen kann, genannt. Neben den beispielhaft vorgenannten Assoziationen können natürlich auch weitere Assoziationen durch Anlagenplaner manuell ergänzt werden.

In einer Fortbildung des Verfahrens untersucht ein Analyse-Algorithmus die Assoziationen der Anlagenplanung im Planungswerkzeug. Dem Planer werden zur Kontrolle seiner Arbeit die Assoziationen mit der höchsten Gewichtung angezeigt. Bekannte Probleme und Problemlösungsvorschläge bei bestimmten Assoziationen werden dem Planer vorgeschlagen. Nun liegt es am Planer, diese Assoziationen in seinem konkreten Anwendungsfall als Probleme einzustufen und zu beseitigen oder die Gewichtung der Assoziation manuell zu reduzieren, sodass diese in der Liste an Bedeutung verliert. Wird ein Problem beseitigt, sollte die Assoziation gänzlich verschwinden oder deren Gewichtung reduziert werden. Führte ein Lösungsvorschlag zu einer Assoziation zu einer Anlagenverbesserung, so bewertet der Planer diesen mit "hilfreich". Folgte aus einem Lösungsvorschlag zu einer Assoziation keine Verbesserung, so wird dieser mit "wenig hilfreich" gekennzeichnet. Damit kommt es zu einer Rückmeldung, die Einfluss auf eine zukünftige Gewichtung der Assoziation haben kann. Assoziationen, die zu Schwierigkeiten führten, welche noch nicht dokumentiert sind, sollten in den Erfahrungsschatz aufgenommen werden, um bei zukünftigen Problemen auf diese zurückgreifen zu können. So kann sukzessiv ein Erfahrungswissen aufgebaut werden, das die Planungsarbeiten erleichtert und zukünftig Planungsfehler vermeidet.

## Patentansprüche

1. Planungs- und Engineering-Verfahren für eine verfahrens- oder prozesstechnische Anlage (1), umfassend die Schritte:
- Bereitstellen eines R&I-Fließschemas der Anlage (1) in welchem für den Betrieb der Anlage (1) erforderliche Komponenten (20, 22, 23, 24, 26) und deren Verbindungen (21, 25) symbolisch dargestellt sind,
- mittels eines Planungs- und Engineeringwerkzeugs (4) Erstellen eines Abhängigkeitsgraphen (40) auf der Grundlage zumindest des R&I-Fließschemas, in welchem
- Anlagenkomponenten, die Feldgeräte und/oder Automatisierungsprogramme umfassen, durch Knoten (42, 43, 44, 45, 46, 47, 51, 52, 58) repräsentiert werden,
- Assoziationen, die Abhängigkeiten und/oder Verbindungen zwischen den Anlagenkomponenten umfassen, durch Kanten (41, 48, 49, 50, 53, 55, 56, 57, 59, 60, 61, 62) zwischen den jeweiligen Knoten repräsentiert werden,
- Interferenzen, die den jeweiligen Grad und/oder die jeweilige Klassifizierung und/oder Bedeutung und/oder Gewichtung einer Assoziation umfassen, Assoziationen zugeordnet werden.

2. Planungs- und Engineering-Verfahren nach Anspruch 1, **dadurch gekennzeichnet, dass** mittels des Planungs- und Engineeringwerkzeugs (4) auf der Grundlage zumindest des R&I-Fließschemas Assoziationen automatisch in den Abhängigkeitsgraphen eingefügt werden.

3. Planungs- und Engineering-Verfahren nach Anspruch 2, **dadurch gekennzeichnet, dass** durch einen Anlagenplaner (33) mittels eines Editors Assoziationen in den Abhängigkeitsgraphen (40) eingefügt oder aus diesem entfernt werden.

4. Planungs- und Engineering-Verfahren nach einem der vorhergehenden Ansprüche, **dadurch gekennzeichnet, dass** der Abhängigkeitsgraph (40) mittels des Planungs- und Engineeringwerkzeugs (4) weiterhin auf der Grundlage zumindest eines Stromlaufplans und/oder zumindest eines Loop-Diagramms und/oder zumindest eines Topologie-Diagramms und/oder zumindest eines Funktionsplans und/oder zumindest eines Schaltschrankplans erstellt wird.

5. Planungs- und Engineering-Verfahren nach einem der vorhergehenden Ansprüche, **dadurch gekennzeichnet, dass** Assoziationen als Interferenz jeweils ein Wert einer Gewichtung zugewiesen wird, wobei ein erster Wert ("4") der Gewichtung eine mechanische Verbindung und ein zweiter Wert ("3") der Gewichtung eine elektrische oder logische Verbindung kennzeichnen.

6. Planungs- und Engineering-Verfahren nach einem der vorhergehenden Ansprüche, **dadurch gekennzeichnet, dass** Komponenten und oder Assoziationen zu ihrer Beschreibung mit Merkmalen nach dem e-Cl@ss-Standard versehen werden.

7. Planungs- und Engineering-Werkzeug für eine verfahrens- oder prozesstechnische Anlage (1), welches dazu ausgebildet ist, auf der Grundlage zumindest eines vorgegebenen oder vorgebbaren R&I Fließschemas der Anlage (1), in welchem für den Betrieb der Anlage (1) erforderliche Komponenten und deren Verbindungen symbolisch dargestellt sind, einen Abhängigkeitsgraphen (49) zu erstellen, in welchem
- Anlagenkomponenten, die Feldgeräte und/oder Automatisierungsprogramme umfassen, durch Knoten (42, 43, 44, 45, 46, 47, 51, 52, 58) repräsentiert werden,
- Assoziationen, die Abhängigkeiten und/oder Verbindungen zwischen den Anlagenkomponenten umfassen, durch Kanten (41, 48, 49, 50, 53, 55, 56, 57, 59, 60, 61, 62) zwischen den jeweiligen Knoten repräsentiert werden,
- Interferenzen, die den jeweiligen Grad und/oder die jeweilige Klassifizierung und/oder Bedeutung und/oder Gewichtung einer Assoziation umfassen, Assoziationen zugeordnet werden.
